# EUROPEAN PATENT SPECIFICATION

(11) **EP 3 119 557 B1**
(45) Date of publication and mention of the grant of the patent: **29.04.2020**
(21) Application number: 15764592.0
(22) Date of filing: 17.03.2015
(51) Int. Cl.: F16L 1/09, B25B 1/10, B25B 1/20, B25B 1/24, B25B 5/00, B25B 5/02, B25B 5/14, B25B 11/02, B25B 27/10, B29C 65/78, B29C 65/02, B29C 65/20, B29C 65/14, B29L 23/20

(54) **SOCKET FUSION JIG FOR PIPES**
WERKSTÜCKSPANNVORRICHTUNG ZUM VERSCHWEISSEN VON ROHREN
SYSTEME DE SERRAGE POUR SOUDER DES TUBES

(30) Priority: 17.03.2014 US 201461954444 P
(43) Date of publication of application: 25.01.2017
(73) Proprietor: McElroy Manufacturing, Inc., Tulsa, Oklahoma 74115 (US)
(72) Inventor: DONALDSON, Paul, John, Broken Arrow, OK 74012 (US)
(74) Representative: J A Kemp LLP
(86) International application number: PCT/US2015/021058
(87) International publication number: WO 2015/142915

(56) References cited:
- DE-U1-202012 100 765
- GB-A- 1 408 608
- JP-U- S57 159 420
- US-A- 4 054 984
- US-A- 4 170 345
- US-A- 4 893 393
- US-A1- 2005 120 539
- US-A1- 2011 089 621
- US-A1- 2012 213 937
- US-A1- 2014 033 491
- US-A1- 2014 033 491

## Description

Heat fusable plastic pipe has been used in industrial, commercial and residential applications for a number of years. Methods of heat fusing plastic pipe include butt fusion, socket fusion and electrofusion. Socket fusion jigs are generally used to fuse pipe after the pipe has been installed. In other words, the socket fusion jig is typically used to fuse a coupling to an already installed pipe. While there are a number of socket fusion jigs on the market right now, there are disadvantages that exist with each. For example, those that exist currently do not allow for installation in close quarters because the pipe must be spaced significantly apart so that the jaws can unclamp far enough to clear the entire outer diameter of the pipe to be removed. Other jigs require power drills or impact drivers to operate and thus require an external source of power. Thus, there is a need for a socket fusion jig that can be utilized in close quarters, that will not deform pipe and that can be used in tight spaces without an external source of power.

US 2005/120539 A1 discloses a socket fusion jig according to the precharacterizing portion of claim 1.

GB 1,408,608 A discloses an apparatus for use in joining pipe lengths of plastic material by fusion welding.

The present invention is defined in the claims. The present disclosure provides a socket fusion jig comprising a pipe support. The pipe support comprises a left pipe clamp jaw and a right pipe clamp jaw. The socket fusion jig further comprises a coupling support and a first input link. The first input link is rotatable about one of its axes. Rotation about the axis of the first input link causes the coupling support to move laterally relative to the pipe support.

The present disclosure also provides a socket fusion jig comprising a pipe support and a coupling support. The pipe support comprises a left pipe clamp jaw and a right pipe clamp jaw. The coupling support comprises a left coupling clamp jaw and a right coupling clamp jaw. The socket fusion jig further comprises a first input link that is rotatable about one of its axes. Rotation about the axis of the first input link causes the coupling support to move laterally relative to the pipe support.

The present disclosure also provides a socket fusion jig comprising a pipe support and a coupling support the pipe support comprises a left pipe clamp jaw and a right pipe clamp jaw. The socket fusion jig further comprises a pipe clamp screw. Rotation of the pipe clamp screw causes the left pipe clamp jaw and the right pipe clamp jaw to move in opposite directions.
FIG. 1 is a perspective view looking at the back, or rear of a socket fusion jig.
FIG. 2 is a perspective view looking at the front or forward side of the socket fusion jig.

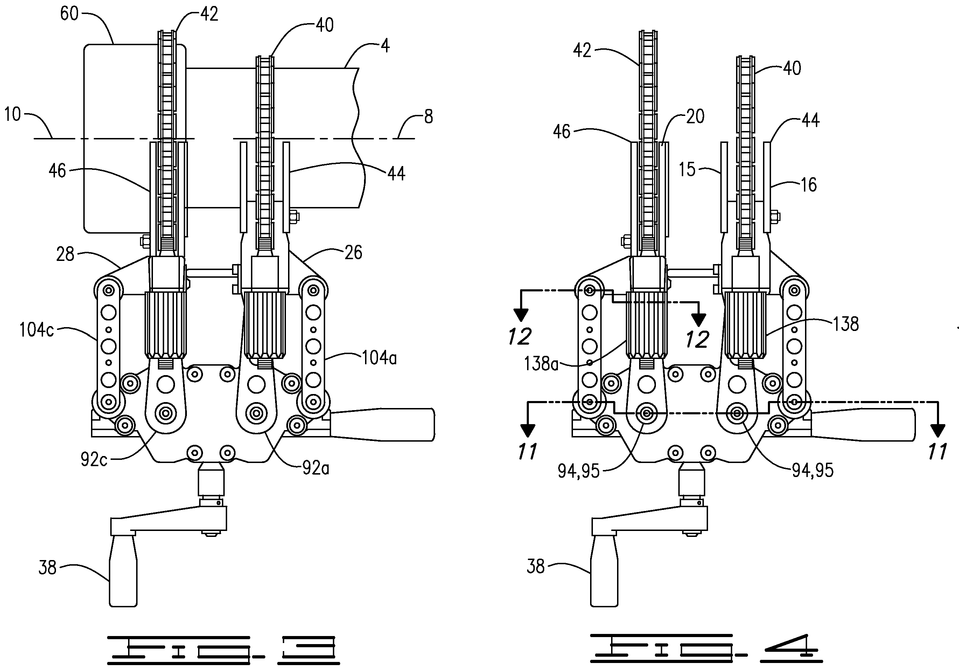

FIG. 3 is a front view of the socket fusion jig with a pipe and coupling mounted therein.
FIG. 4 is a front view of the socket fusion jig with a stab depth indicator extended.

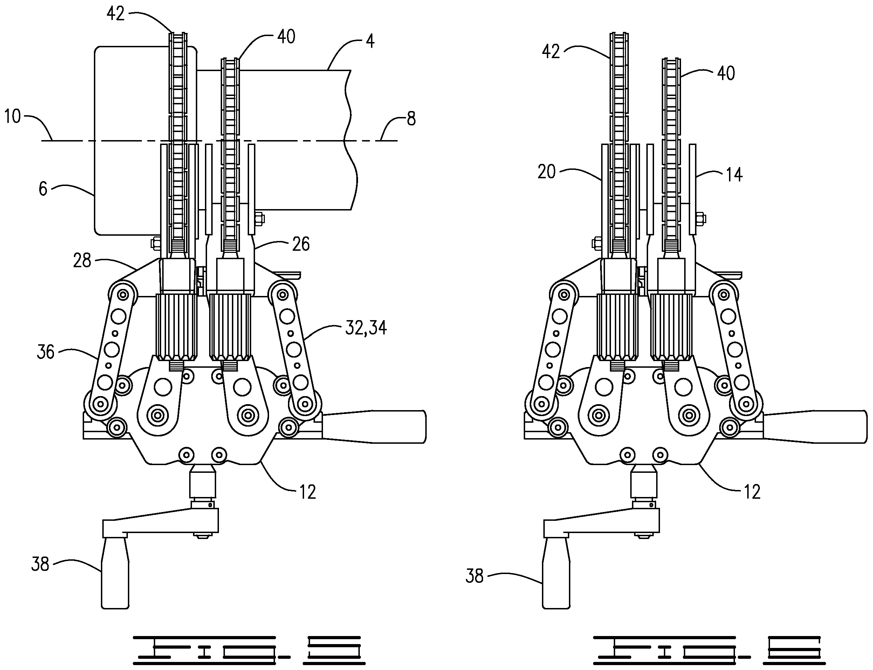

FIG. 5 is a front view with the pipe and coupling joined.
FIG. 6 is a front view with the jig closed, but without the pipe and coupling.

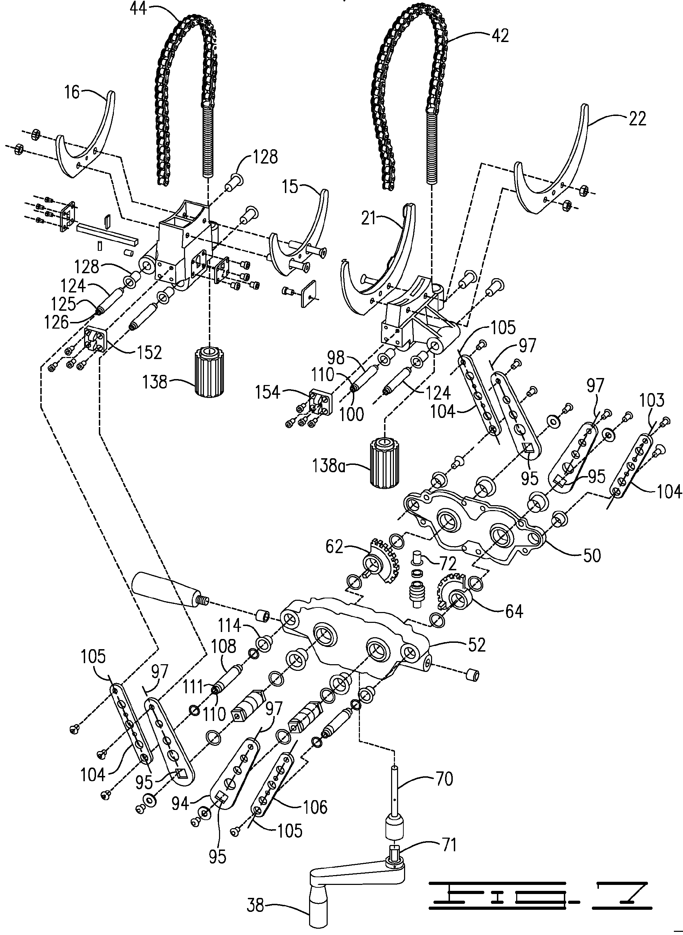

FIG. 7 is an exploded view of the socket fusion jig.
FIG. 8 is a view of the socket fusion jig in the partially open position with the gear box body removed.
FIG. 9 is a right side view of the socket fusion jig.
FIG. 10 is a section view through line 10-10 of FIG. 9.

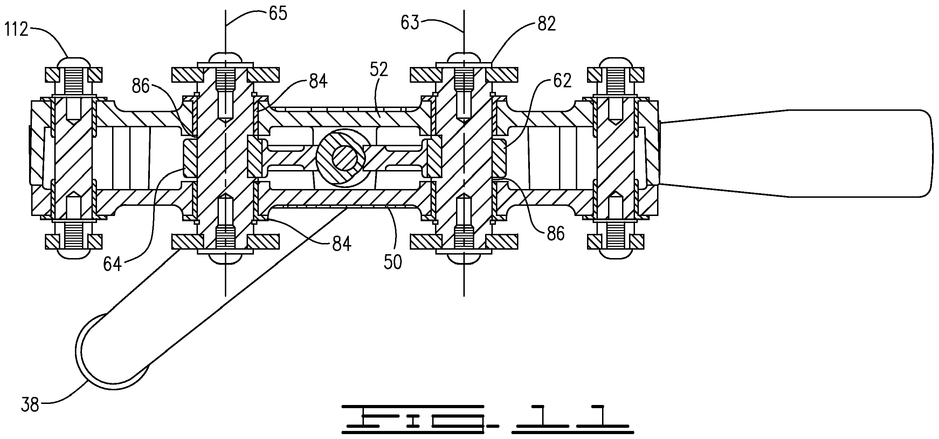

FIG. 11 is a section view through line 11-11 of FIG. 4.

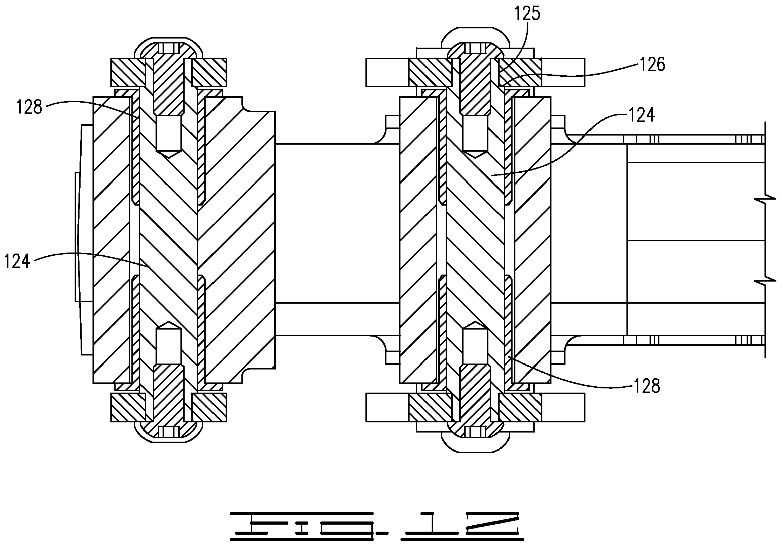

FIG. 12 is a section view through line 12-12 of FIG. 4.
FIG. 13 shows the socket fusion jig with a heater in phantom lines and prepared for insertion.
FIG. 14 is a front view with the pipe inserted into the heater.
FIG. 15 is a perspective view of an embodiment of a socket fusion jig according to the present invention.
FIG. 16 is an exploded view of the embodiment of FIG. 15.
FIG. 17 is an exploded view of a pipe jaw assembly.
FIG. 18 is an exploded view of a coupling jaw assembly.
FIG. 19 is a side view of the embodiment of FIG. 15.
FIG. 20 is a section from line 20-20 of FIG. 19.
FIG. 21 is a view of the pipe clamp of the embodiment of FIG. 15.
FIG. 22 is a view from line 22-22 of FIG. 21.
FIG. 23 is a side view of the embodiment of FIG. 15.
FIG. 24 is a section from line 24-24 of FIG. 19.
FIG. 25 is a view of the coupling clamp of the embodiment of FIG. 15.
FIG. 26 is a view from line 26-26 of FIG. 25.

The current disclosure is directed to a socket fusion jig used for mechanically joining heat fusible plastic pipe. The socket fusion jig described herein is a lightweight socket fusion jig that is manually operated and requires no external source of power. The socket fusion jig is adapted to be used in tight spaces in connection with installed pipe that is fixed in place.

Referring now to the drawings, socket fusion jig 2 is used to connect a pipe 4 to a coupling 6. Pipe 4 has longitudinal center line 8, and coupling 6 has longitudinal center line 10. Socket fusion jig 2 comprises a gear box 12, with a gear arrangement disposed therein. The gear arrangement will be described in more detail herein below. Socket fusion jig 2 includes a pipe saddle 14 and a coupling saddle 20. Pipe saddle 14 is a removable and replaceable pipe saddle 14, which comprises a pair of pipe saddle plates 15 and 16 respectively. Pipe saddle plates 15 and 16 have arcuate surfaces 17 and 18 respectively that collectively comprise the curved or arcuate surface 19 of saddle 14. Surfaces 17 and 18 define an arc of less than 180° and preferably define an arc of about 165° such that the ends of the pipe saddle 14 will be positioned below longitudinal center line 8 of a pipe 4 positioned in saddle 14.

Coupling saddle 20 may comprise a pair of coupling saddle plates 21 and 22. Coupling plates 21 and 22 have arcuate surfaces 23 and 24 which collectively define the curved, or arcuate surface 25 of coupling saddle 20. Surfaces 23 and 24 may define an arc of less than 180° and preferably about 165°, such that the ends 46 thereof are positioned below the axis 10 of coupling 6. Pipe saddle 14 is removably connected to a pivot or jaw block 26 and coupling saddle 20 is removably connected to pivot or jaw block 28. Because pipe saddle 14 and coupling saddle 20 are removable, socket fusion jig 2 is adapted to join pipes to couplings over a range of pipe diameters. Socket fusion jig 2 may be especially useful for joining couplings to pipe ranging from about 63 millimeters to about 125 millimeters, and may be used to join a coupling to pipe outside the ranges mentioned.

A pair of oppositely rotating four bar linkages 32 are utilized to move pipe saddle 14 and coupling saddle 20 laterally relative to one another. Oppositely rotating four bar linkages 32 comprise a first four bar linkage 34 for moving pipe saddle 14 and a second four bar linkage 36 for moving coupling saddle 20. A handle 38 is utilized to operate a gear arrangement housed in gear box 12. The gear arrangement in gear box 12 is preferably a worm gear set which will be described in more detail herein below. Rotation of handle 38 will cause synchronized movement of first and second four bar linkages 34 and 36 respectively. Pipe 4 will be restrained in pipe saddle 14. Pipe 4 is installed pipe, so that pipe saddle 14 when attached to pipe 4 is fixed against movement. Rotation of handle 38 will therefore cause coupling saddle 20, along with coupling 6 therein, to move linearly towards and away from pipe saddle 14 and pipe 4. Longitudinal central axes 8 and 10 will stay in a co-linear relationship as coupling 6 is moved.

A pipe restraint 40 is used to hold pipe 4 in pipe saddle 14. Likewise, a coupling restraint 42 is used to hold coupling 6 in coupling saddle 20. Pipe and coupling restraints 40 and 42 may comprise roller chains which may be for example nickel-plated, lube-free roller chains. Use of a lube-free roller chain prevents chain lubrication from contaminating a fusion joint. Roller chains 40 and 42 are conformable to the shape of pipe 4 and coupling 6 respectively. The combination of pipe saddle 14 and chain 40 will engage the outer surface of pipe 4 over about at least 275° and preferably as much as about 325°. Likewise, the combination of coupling saddle 20 and chain 42 will engage the outer surface of coupling 6 over at least about 275° and preferably as much as about 325°. Because a significant amount of the outer surfaces of the pipe 4 and coupling 6 are engaged during the joining process, deformation, which is a concern with prior art socket fusion jigs, may be prevented.

Surface 25 of coupling saddle 20 is a curved engagement surface with a radius of curvature that matches the radius of curvature of the outer surface of coupling 6. Surface 25 preferably passes through an arc of at least about 165°. Ends 46 of coupling saddle 20 are thus positioned below center line 10 of coupling 6. Surface 19 of pipe saddle 14 is a curved engagement surface, and preferably has a radius of curvature that matches the radius of curvature of the outer diameter of pipe 4. Curved engagement surface 19 has an arc of less than 180°, and in one example has an arc of at least about 165°. Ends 44 of pipe saddle 14 will thus be positioned below the longitudinal central axis 8 of pipe 4. Curved surface 19 mates with the outer surface of pipe 4, and curved surface 25 mates with the outer surface of coupling 6. Roller chain 40 will conform to the shape of pipe 4 around about 130° to 160° of the outer surface of pipe 4. Likewise, roller chain 42 will conform to the outer surface of coupling 6 and will engage approximately 130° to 160° thereof. Curved surfaces 19 and 25 may be serrated surfaces to aid in retaining pipe 4 and coupling 6 therein.

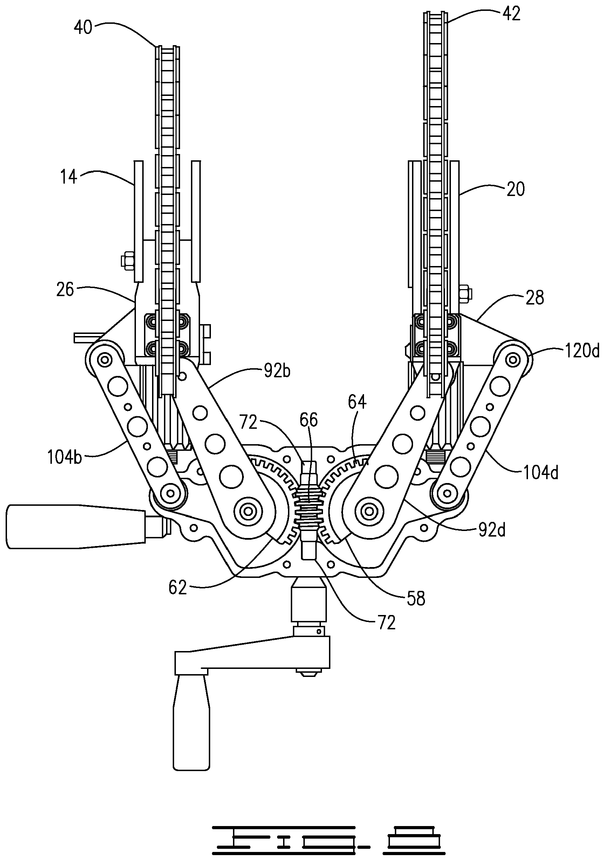

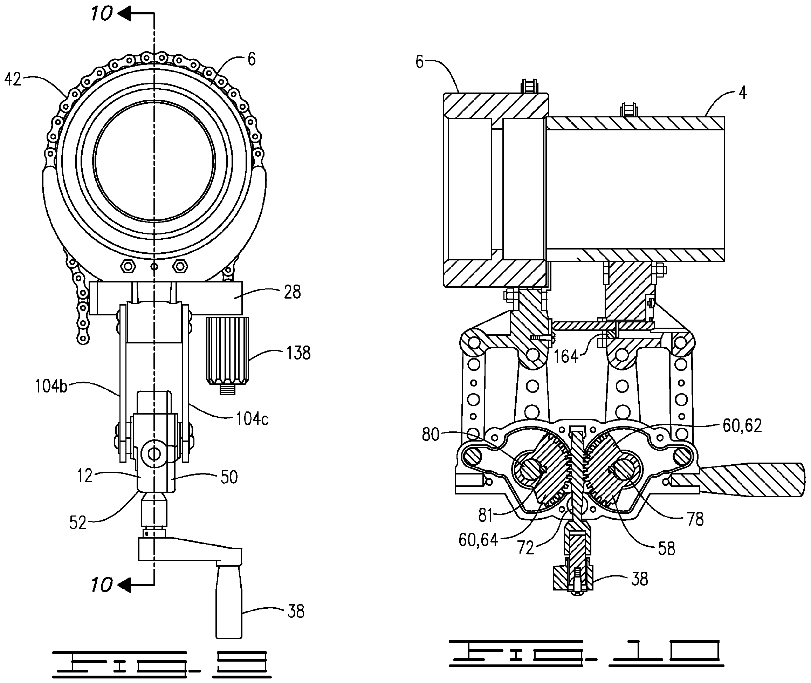

Gear box 12 may comprise a face plate 50 attached to a gear box body 52 with screws, other fasteners, or other means known in the art. FIG. 8 is a view looking at face plate 50 with gear box body 52 removed. FIG. 10 is a cross-section taken through lines 10-10 of FIG. 9. Socket fusion jig 2 includes a worm gear drive 58 which may comprise a pair of worm gears 60. Worm gears 60 may comprise a right or first worm gear 62 which will drive first four bar linkage 34 and a second or left worm gear 64 which will drive second four bar linkage 36. First worm gear 62 rotates about a longitudinal central axis 63 and second worm gear 64 rotates about longitudinal central axis 65. Axes 63 and 65 are parallel and are coplanar. A worm 66 is positioned between first and second worm gears 62 and 64.

Rotation of handle 38 will rotate worm 66 which will rotate worm gear 62 and 64 about their respective longitudinal central axis 63 and 65 in opposite directions. Thus, worm gears 62 and 64 may be referred to as oppositely rotating worm gears 62 and 64. Worm gear drive 58 may be configured to provide a mechanical advantage such that the operator can create a fusion on large pipe sizes, up to at least 125 millimeters in diameter, with minimal effort. For example, worm gears 62 and 64 and worm 66 may be configured such that a mechanical advantage of approximately 40 to 1 may be achieved. In addition, worm drive 58 is designed so that it cannot be back driven by any external pressure, and will hold pipe 4 and coupling 6 in place during the joining operation.

Handle 38 is connected to a shaft 70 in a manner known in the art, and for example may have a square pin 71 connected thereto inserted into a square opening in shaft 70. Shaft 70 has longitudinal central axis 69, and is pinned or otherwise fixed to worm 68 such that rotation of handle 38 will cause rotation of worm 66, in turn causing opposite rotation of worm gears 62 and 64. A pair of shouldered bushings 72 are pressed into gear box body 52 and shaft 70 will rotate therein. Longitudinal central axis 69, about which handle 70 rotates, is perpendicular to axes 8 and 10 of pipe 4 and coupling 6, respectively.

Worm gears 62 and 64 are keyed to shafts 78 and 80 respectively with keys 81. Shafts 78 and 80 have longitudinal central axis 63 and 65 respectively. Shafts 78 and 80 are essentially identical except the location of the key 81 may be different. As such, the details of shafts 78 and 80 will be explained with respect only to shaft 78. The features on shaft 80 will be identified on the drawings with the numbers used for the features on shaft 78. Shafts 78 and 80 have square ends 82 connected to the four bar linkages 34 and 36. Bushings 84 are pressed into gear box plate 50 and gear box body 52, and shafts 78 and 80 rotate therein. Shaft 78 may have retaining rings 86 disposed thereabout to hold key 81 in place.

In the example shown, shaft 78 is connected to an input link 92 of four bar linkage 34. Cap screws and flat washers or other fasteners known in the art may be utilized to hold input link 92 to shafts 78 and 80. The details of four bar linkage 34 will be explained and it is understood that the details of four bar linkage 36 are generally identical.

Input link 92 may comprise two separate links designated as 92A and 92B which act as a single link 92 in four bar linkage 34. Input link 92 has first end 94 with a square opening 95 therein adapted to receive the ends of shaft 78 so that rotation of shaft 78 will cause the rotation of input link 92 about longitudinal axis 63. Input link 92 has a second end 96 connected to first pivot block 26. Input link 92 has a longitudinal center line 97. A pin 98 extends through first pivot block 26. Pin 98 has reduced diameter portions 100 at both ends thereof, which define shoulders 101. A pair of bushings 102, which may be shouldered bushings 102 are press fit into pivot block 26. A cap screw 103 or other fastener may be used to connect second end 96 of input link 92 to shaft 98. Shaft 98 may rotate relative to input link 92, and shaft 98 may rotate in bushings 102 such that shaft 98 rotates relative to pivot block 26.

Four bar linkage 34 includes a follower link 104 which may be comprised of two separate links 104A and 104B that act as one single follower link 104. Follower link 104 has first end 106. A shaft 108 with reduced diameter portions 110 at each end thereof extend through an opening at or near first end 106 of links 104A and 104B. Reduced diameter portions 110 define shoulder 111. Cap screws 112 are inserted into each end of shaft 108 to press follower link 104 against shoulders 111. Bushings 114, which are oppositely facing shouldered bushings are received about shaft 108 and pressed into gear box plate 50 and gear box body 52. A pair of retaining rings 116 may be utilized to prevent movement of bushings 114 and engage the shoulders on bushings 114. Shaft 108 rotates in bushings 114. The longitudinal center line 105 of follower link 104 is parallel or is substantially parallel to a longitudinal center line 97 of input link 92.

A pin 124 has reduced diameter portions 125 that define shoulders 126. Reduced diameter portions 125 of pins 124 extend through openings at or near the second ends 120 of follower link 104. A cap screw or other fastener is inserted into shaft 124 to hold link 104 against shoulders 126. A pair of bushings 128 are pressed on or otherwise fixed in pivot block 26 and shaft 108 rotates in bushings 128.

Four bar linkage 34 as described herein comprises input link 92 and follower link 104. The third link is defined by the portions of gear box 12 that extend between first end 106 of follower link 104 and first ends 94 of input link 92. The fourth link comprises the portions of pivot block 26 between upper ends 96 and 120 of input link 92 and follower link 104 respectively.

The identical numbers are utilized on second four bar linkage 36 except that the designations C and D are utilized in place of A and B to allow for ease of identification. It is evident that the operation of four bar linkages 34 and 36 are identical and that first four bar linkage 34 moves pivot block 26 while second four bar linkage 36 moves pivot block 28.

A check plate 132 may be integrally formed with or connected to coupling saddle plate 21 which may be described as inner coupling saddle plate 21. Check plate 132 is used to provide a stop for coupling 6. Coupling 6 when properly positioned during the joining operation with pipe 4 will be pressed against check plate 132.

First pivot block 26 has a lug 134 extending therefrom that may be integrally formed therewith. Lug 134 has an opening 136 therethrough. A knob 138 which may be referred to as an adjustment knob 138 has an internal thread (not shown). A thrust bearing 142 is mounted at an upper end of knob 138. Chain 40 is connected to an upper end 144 of a rod 146 which may be an all thread rod 146. Pivot block 28 likewise has a lug 162. Lug 162 has an opening 150 therein. A second knob 138 which may be referred to as knob 138A for ease of reference has an internal thread and thrust bearing 142 mounted at an upper end thereof. Chain 42 is connected to an upper end 144 of an all thread rod 146 which may be referred to as an all thread rod 146A for ease of reference.

Pivot block 26 has a pair of teeth, or hooks 152 and pivot block 28 has teeth, or hooks 154. In operation of socket fusion jig 2, chain 40 will be positioned on teeth 152 and chain 42 will be positioned on teeth 154.

An automatic stab depth indicator 156 comprises a depth guide, or depth pin 156 with markings or stab depth indications 158 thereon. Markings 158 are identified with the size of the pipe 4 to be joined to a coupling 6. Pin 154 has a plurality of notches 160 associated with each stab depth indication.

A release pin 162 which may be spring loaded or otherwise biased toward notches 160, hold depth pin 156 in place to automatically set a stab depth. When release pin 162 is raised, a return spring 164 will force pin 156 to retract.

The socket fusion jig 2 as described herein may be used in the process of fusing or joining pipe 4 and coupling 6. Socket fusion jig 2 is generally to be used with a pipe 4 that is installed and fixed against movement. Socket fusion jig 2 is a variable size jig in that it can be used for a range of pipe sizes. As previously explained pipe saddle 14 and coupling saddle 20 are removable. Pipe saddle 14 and coupling saddle 20 are selected so that the radius of curvature of the engagement surfaces 19 and 25 match the radius of the pipe 4 and coupling 6 to be joined. Socket fusion jig 2 may be used with pipe sizes over a wide diameter range, and preferably from about 63 millimeters to at least about 125 millimeters.

Coupling 6 is first attached to socket fusion jig 2 by placing the coupling 6 in saddle 20. Coupling 6 should be pressed against check plate 132 to ensure proper stab depth. Chain 42 is positioned over coupling 6 and will conform to the shape thereof. Chain 42 is attached to the chain hooks or teeth 154 on pivot block 28. Chain 42 is tightened by rotating clamp knob 138A. As explained previously, curved surface 25 of saddle 20 is adapted to mate with the outer surface of coupling 6 and therefore engage coupling 6 over approximately 150° to 175° and preferably at least about 165°. Chain 42 will engage the outer surface of coupling 6 over approximately 130° to 160° thereof. Thus, coupling 6 can be securely fixed in saddle 20 and because the engagement of approximately 280° to 340° with coupling 6, socket fusion jig 2 will prevent any deformation of coupling 6. Thus, socket fusion jig is a deformation free socket fusion jig.

The proper stab depth for pipe 4 into coupling 6 may be set by utilizing stab depth pin 158. For example, if a 125 mm pipe is to be joined, pin 158 will have a 125 mm marked notch thereon. Stab depth pin 156 will be pushed inwardly through pivot block toward pivot block 28. The pin will be pushed in until the 125 mm notch is reached, which will be recognized by the 125 mm mark seen on pin 156 as it passes through pivot block 26.

Pin 156 is retained by two guide plates 166 and 168 respectively, one each positioned on the sides of pivot block 26. Pin 156 is pushed into the selected depth which corresponds to a selected marking on pin 158. Once stab depth indicator pin 158 is set, handle 38 is rotated to bring saddles 14 and 20 together. Rotation of handle 38 will move saddle 20 linearly toward saddle 14, so that longitudinal central axis 10 of coupling 6 stays in alignment with longitudinal axis 8 of pipe 4. This insures the proper alignment of pipe 4 and coupling 6 during the joining operation. Jaws 26 and 28 are brought together until stab depth indicator pin 156 touches stop plate 169 on pivot block 28.

Once the proper stab depth has been set, pipe 4 is loaded into saddle 14. Chain 40 is wrapped around pipe 4 and is attached to teeth 152 on pivot block 26. Clamp knob 138 is tightened to retain pipe 4 in saddle 14. Prior to tightening chain 40 over pipe 4, pipe 4 is to be pressed against the coupling with stab depth indicator pin 156 still engaging plate 168. Pipe 4 is then clamped in place.

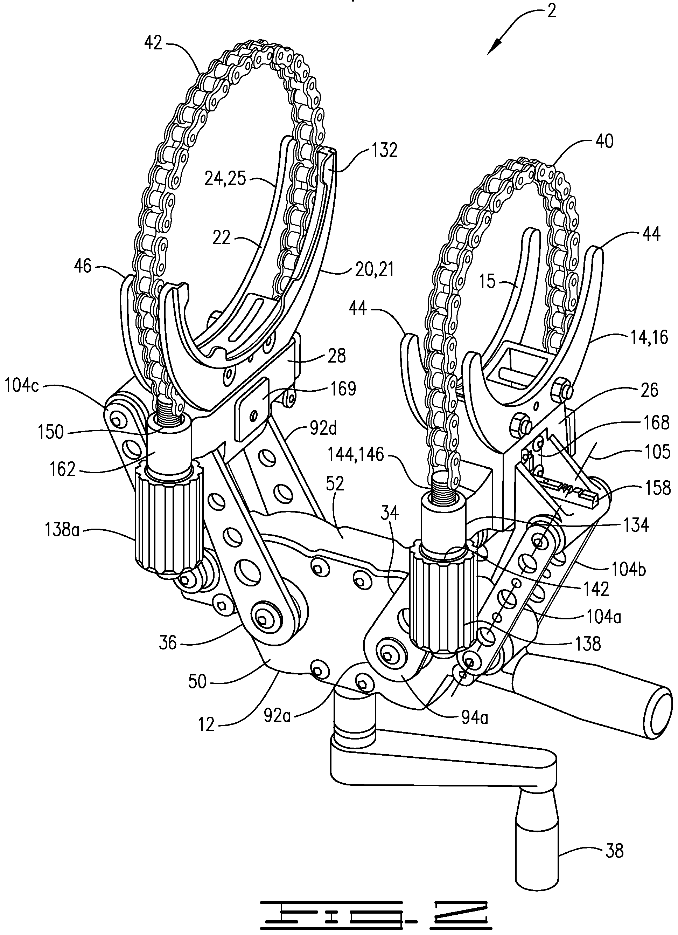

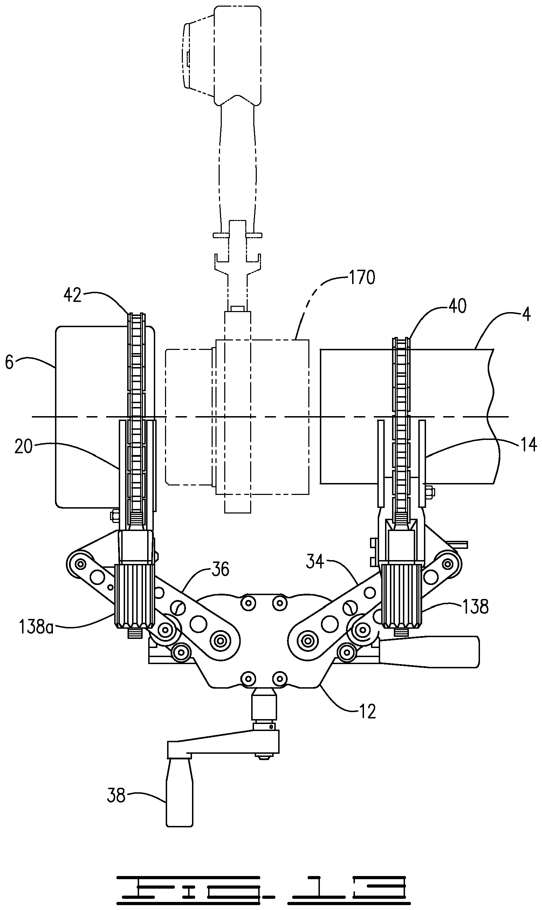

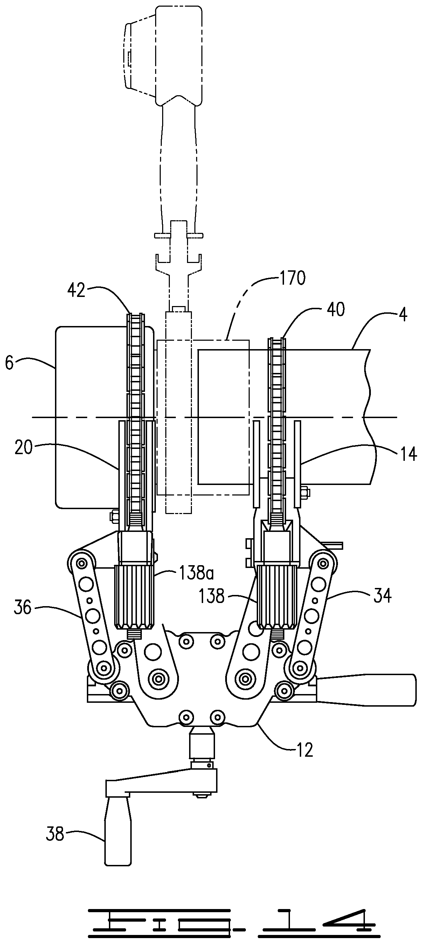

Once pipe 4 and coupling 6 are both properly clamped in jaw blocks 26 and 28 respectively, handle 38 is rotated so that four bar linkages 34 and 36 move simultaneously. Stab depth pin 156 is released by moving the quick release latch 162 upwardly. Handle 38 is rotated counter-clockwise from the view in FIG. 2 to move jaws to a fully open position. A heater 170, which is shown in dashed lines in FIGS. 13 and 14 is inserted between coupling 6 and pipe 4. Handle 38 is then rotated to bring jaw blocks 26 and 28 together, thus bringing saddles 14 and 20 together. Because pipe 4 is fixed against motion, the rotation of handle 38, which causes synchronized movement of four bar linkages 34 and 36, moves saddle 20 and thus coupling 6 linearly directly toward pipe 4. As is apparent from the drawings, the longitudinal central axis 10 of coupling 6 and longitudinal central axis 8 of pipe 4 will stay in fixed co-linear relationship. Handle 38 is rotated so that heater 130 is inserted into coupling 6 and disposed about pipe 4. Heater 170 is allowed to soak for a proper amount of time.

Once pipe 4 and coupling 6 are heated, jaws 26 and 28 are opened quickly and heater 170 is removed. Jaws 26 and 28 are then moved together until stops 172 on pivot block 26 are pressed against stop plate 169 on pivot block 28 to provide proper fusion and stab depth. Pipe 4 and coupling 6 are allowed to cool for a proper amount of time after which the pipe and coupling are unclamped. Because handle 38 is positioned beneath saddles 14 and 20, ease of installation and operation are greater than that with prior art socket fusion jigs.

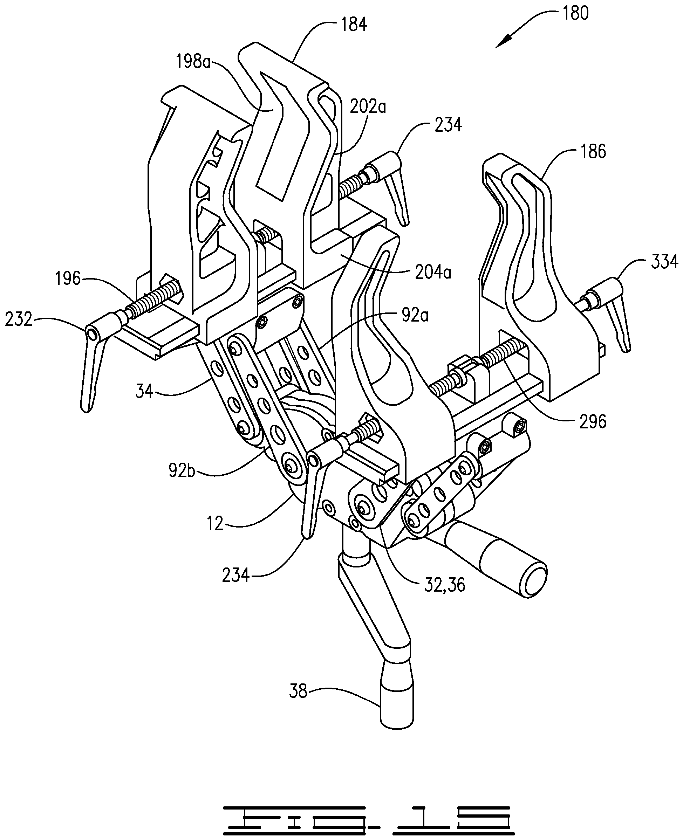

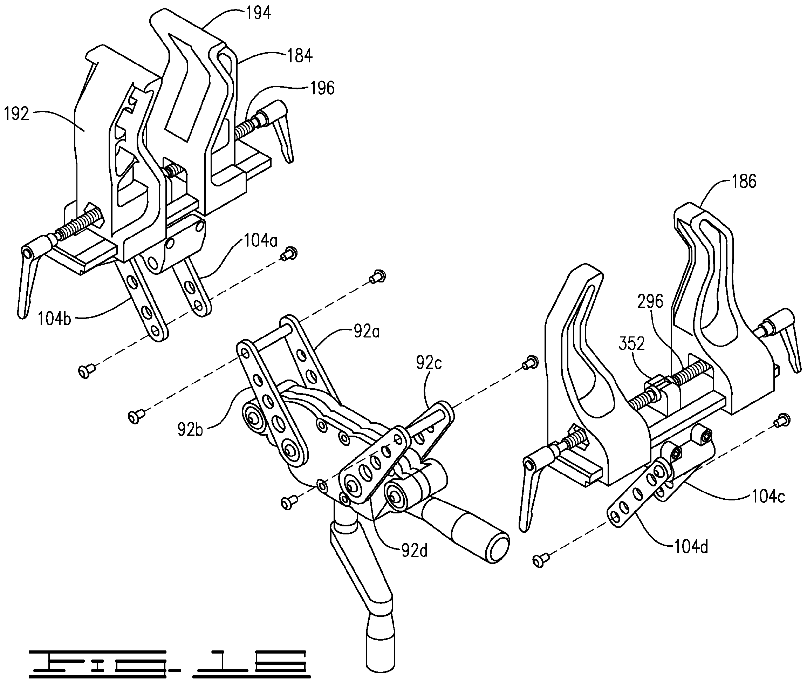

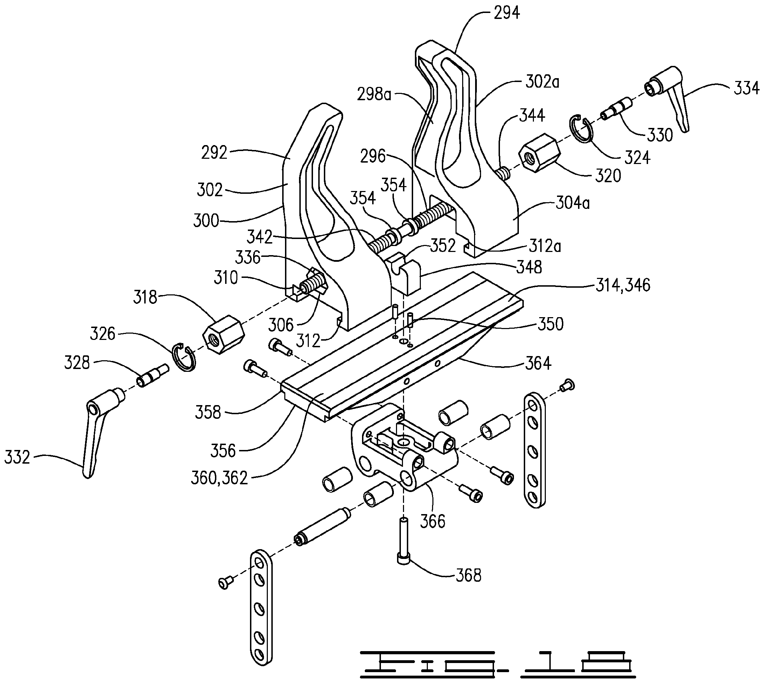

An embodiment of a socket fusion jig according to the present invention and identified as socket fusion jig 180 is shown and described with reference to FIGS. 15-26. Socket fusion jig 180 comprises a pipe support 184, which is a pipe jaw assembly in the embodiments shown in FIGS. 15-26. The socket fusion jig 180 also comprises a coupling support 186, which is a coupling jaw assembly in the embodiments shown in FIGS. 15-26.

Socket fusion jig 180 operates similarly to socket fusion jig 2. Thus, socket fusion jig 180 includes a gear box 12, first and second four bar linkages 34 and 36 for moving pipe support 184 and coupling support 186. Rotation of handle 38 causes synchronized rotation of four bar linkages 34 and 36 and causes relative movement between pipe support 184, which may also be referred to as a pipe jaw assembly, and coupling support 186, which may also be referred to as a coupling jaw assembly.

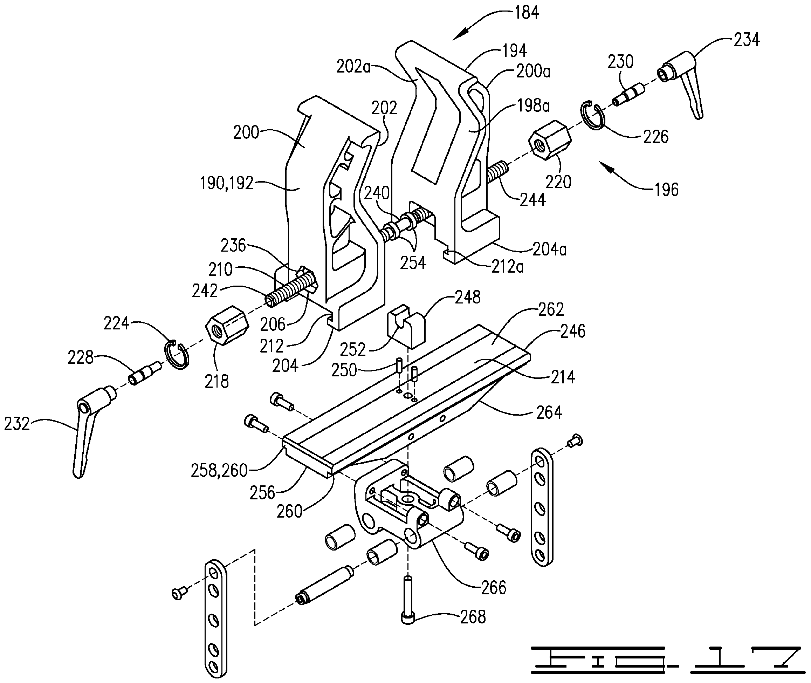

Referring now to FIG. 17, the details of one embodiment of the of pipe jaw assembly 184 are described below. Pipe jaw assembly 184 comprises a pair of opposed pipe clamp jaws 190. The opposed pipe clamp jaws 190 may be referred to as first, or left pipe clamp jaw 192, and second or right pipe clamp jaw 194. Pipe clamp jaws 192 and 194 may also be referred to simply as pipe clamp jaws 192 and 194. A tightening mechanism 196 is used to move opposed pipe clamp jaws 192 and 194 transversely toward and away from each other.

Left pipe clamp jaw 192 and right pipe clamp jaw 194 are substantially similar. Therefore, the same numbers are used to identify the features on right pipe clamp jaw 194 as those in the left pipe clamp jaw, but with the added subscript "a." The left pipe clamp jaw 192 comprises an inner surface 198, which is a generally V-shaped inner surface adapted to engage a pipe positioned between clamping jaws 192 and 194. The left pipe clamp jaw 192 also comprises an outer surface 200. Inner surface 198 is a serrated surface to provide for efficient gripping engagement. Left pipe clamp jaw 192 has a clamp portion 202 and a base 204. V-shaped inner surface 198 is defined on clamp portion 202. An opening 206 is defined in base 204, which in the embodiment shown, is a hex-shaped opening. A passage 208 extends through base 204 to allow tightening mechanism 196 to pass therethrough. Base 204 has opposed channels 210 and 212 which define slots or grooves to receive a first slide 214. Left and right pipe jaws 192 and 194 move transversely on a first slide 214 as further described herein.

Tightening mechanism 196 extends through left pipe clamp jaw 192 and right pipe clamp jaw 194. Rotation of tightening mechanism 196 causes the pipe clamp jaws 192 and 194 to move inward and outward relative to one another along first slide 214. Tightening mechanism 196 comprises a pipe clamp screw 216, a first or left hand drive nut 218, a second or right hand drive nut 220, a left hand snap ring 224, a right hand snap ring 226, a left hand adjustable handle screw 228, a right hand adjustable handle screw 230, a left pipe clamp jaw handle 232 and a right pipe clamp jaw handle 234.

The pipe clamp screw 216 passes through hexagonal opening 206 and passage 208 in base 204. A portion of the pipe clamp screw 216 extends outward past both the left hand and right hand pipe clamp jaws 192 and 194. Pipe clamp screw 216 is symmetrical in that one side has a left hand thread and the other a right hand thread.

First, or left hand drive nut 218 is positioned within hexagonal opening 206 in base 204 of the left pipe clamp jaw 192. Left hexagonal opening 206 contains a recess 236 which receives the left hand snap ring 224. Left hand snap ring 224 is positioned outward relative to the left hand drive nut 218 and thereby holds left hand drive nut 218 in place. Left hand adjustable handle screw 228 threadedly connects left pipe clamp jaw handle 232 to pipe clamp screw 216. The arrangement and connection of the right hand drive nut 220, right hand snap ring 226, right hand adjustable screw 230 and right pipe clamp jaw handle 234 are similar to the corresponding left hand components.

The initial positions of the left hand drive nut 218 and the right hand drive nut 220 determine the final, tightened positions of the pipe clamp jaws 192 and 194. The left and right hand drive nuts 218 and 220 are positioned on the pipe clamp screw 216 so that the left and right hand pipe jaws 192 and 194 will apply equal clamping force to a pipe when pipe jaws 192 and 194 are moved together to clamp a pipe.

Pipe clamp screw 216 has a non-threaded center portion 240, a right hand thread on the left side 242 thereof, and a left hand thread on the right side 244 thereof. In the embodiment described, the threads are buttress threads and are tapered on one side and square on the other. The square threads provide for a greater clamping strength when the pipe jaws 192 and 194 are clamped to a pipe, while the tapered side allows for an easier release. Thus, the square face of the thread on the pipe clamp screw 216 will face inward relative to the jaws 192 and 194.

As understood from the figures, rotation in the first direction pushes left and right drive nuts 218 and 220 inward, which will press on pipe clamp jaws 192 and 194 and push them inwardly towards one another. Rotation in the opposite direction will cause drive nuts 218 and 220 to push on left and right snap rings 224 and 226 and move pipe clamp jaws 192 and 194 outwardly relative to each other. Left pipe clamp jaw handle 232 and right pipe clamp jaw handle 234 are used to rotate the pipe clamp screw.

Thus, rotation of the pipe clamp screw 216 in a first direction causes left and right pipe clamp jaws 192 and 194 to move together to clamp and hold a pipe like pipe 4 in the embodiment of FIG. 15. For example, rotation of left pipe clamp jaw handle 232 to the right, or clockwise in the view of FIG. 15, causes left and right pipe clamp jaws 192 and 194 to move together. Rotation in a second or opposite direction will cause the pipe clamp jaws 192 and 194 to move transversely away from each other. The thread direction may be reversed. In some embodiments, it is only necessary that the left and right thread directions be different, so that rotation of the single screw 216 will move both of pipe clamp jaws 192 and 194.

If pipe clamp jaws 192 and 194 do not clamp with relatively equal force, pipe clamp jaws 192 and 194 can be adjusted by removing one of snap rings 224 and 226, and adjusting the relative position of left and right drive nuts 218 and 220. For example, upon removal of snap ring 224, left hand pipe clamp 192 may be freely moved toward non-threaded center 240 until it clears left hand drive nut 216. The left hand drive nut, because it is a hex nut, can be rotated in 1/6 rotation increments in either direction until the optimum clamping location is reached. The hex shape of the drive nuts allows for fine adjustment of the positions of pipe clamp jaws 192 and 194.

First slide 214 to which pipe jaw assembly 184 is attached comprises a slide, or slide bar 246 having a screw retaining block 248 connected thereto with a pair of dowel pins 250 or other known mechanisms. Screw retaining block 248 is fixed to slide 246 with dowel pins 250 at or near the center of the jaw slide bar 246. Screw retaining block 248 has a curved, or arcuate recess 252 in which non-threaded center 240 rests and rotates. Collars 254 are positioned on both sides of retaining block 248 to aid in holding the pipe clamp screw 216 in place. The left and right pipe clamp jaws also attach to the clamp jaw slide bar 246.

First slide 214 is a generally T-shaped slide with leg 256 and T-portion 258 with arms 260. Arms 260 are received in channels 210 and 212. An upper surface 262 of T-portion 258 has a recess 264 so as to reduce friction when pipe clamp jaws 192 and 194 slide thereover. The width and thickness of legs 256 are such that during clamping, tilting of the pipe clamp jaws 192 and 194 is minimized or prevented. First slide 214 has a connecting block 264 extending downwardly from T-portion 258. A pivot or jaw block 266 is connected thereto.

First slide 214 attaches to the pivot block 266 with fasteners extending therethrough into connecting block 264. A pin 268 also extends upwardly through pivot block 266 into first slide 214. Four bar linkage 34 connect in the same manner as described with reference to socket fusion jig 2. In the embodiment of FIG. 15, the fourth link of four bar linkage 34 are the portions of pivot block 266 between the upper ends 96 and 120 of input link 92 and follower link 104.

The details of coupling support or coupling jaw assembly 186 are similar to that described with reference to pipe support 184. Coupling jaw assembly 186 comprises a pair of opposed coupling clamp jaws 290, which may be referred to as first or left coupling clamp jaw 292 and right coupling clamp jaw 294. Jaws 292 and 294 may be referred to simply as coupling jaws 292 and 294. A tightening mechanism 296 can be used to move coupling jaws 292 and 294 toward and away from each other.

Left coupling jaw 292 and right coupling jaw 294 are substantially similar. Right coupling clamp jaw 294 is a mirror image of left coupling clamp jaw 292, and the same numbers will be used to identify the common features on right coupling jaw 294, with the subscript "a." The left coupling clamp jaw 292 comprises an inner surface 298 which is a generally V-shaped inner surface adapted to engage a coupling positioned between coupling jaws 292 and 294, and has outer surface 300. Inner surface 298 may be a serrated surface to provide for efficient gripping engagement. Left coupling jaw 292 is rigid and adapted to secure a coupling in place while a pipe is joined thereto. Left coupling clamp jaw has a clamp portion 302 and a base 304. V-shaped inner surface 298 is defined on clamp portion 302. An opening 306, which in the embodiment shown is a hex-shaped opening, is defined in base 304. A passage 308 extends through base 304 to allow tightening mechanism 296 to pass therethrough. Base 304 has opposed channels 310 and 312 which define slots, or grooves to receive a second slide 314. Left and right coupling jaws 292 and 294 can move transversely on a second slide 314 as further described herein.

Tightening mechanism 296 extends through left coupling clamp jaw 292 and right coupling clamp jaw 294. Rotation of tightening mechanism 296 will cause coupling clamp jaws 292 and 294 to move inward and outward relative to one another along second slide 314. Tightening mechanism 296 comprises a coupling clamp screw 316, a first, or left hand drive nut 318, a second, or right hand drive nut 320, a left hand snap ring 324, a right hand snap ring 326, a left hand adjustable handle screw 328, a right hand adjustable handle screw 330, a left coupling clamp jaw handle 332 and a right hand coupling clamp jaw handle 334.

The coupling clamp screw 316 passes through hexagonal opening 306 and passage 308 in base 304. A portion of the coupling clamp screw 316 extends outward past both the left hand and right hand coupling clamp jaws 292 and 294, respectively. Coupling clamp screw 316 is symmetrical in that one side has a left hand thread and the other has a right hand thread.

First, or left hand drive nut 318 is positioned within the hexagonal opening 306 in base 304 of the left coupling jaw 292. Left hexagonal opening 306 contains a recess 336 which receives the left hand snap ring 324. Left hand snap ring 324 is positioned outward relative to the left hand drive nut 318 and holds left hand drive nut 318 in place. Left hand adjustable handle screw 328 threadedly connects left coupling clamp jaw handle 332 to coupling clamp screw 316. The arrangement and connection of the right hand drive nut 320, right hand snap ring 326, right hand adjustable screw 330 and right hand coupling clamp jaw handle 334 can be like that described with respect to the left hand components.

The initial positions of the left hand drive nut 318 and the right hand drive nut 320 determines the final, tightened positions of the coupling clamp jaws 292 and 294. The left and right hand drive nuts 318 and 320 are positioned on the coupling clamp screw 316 so that the left and right hand coupling jaws 292 and 294 will apply equal clamping force to a coupling when coupling jaws 292 and 294 are moved together to clamp a coupling.

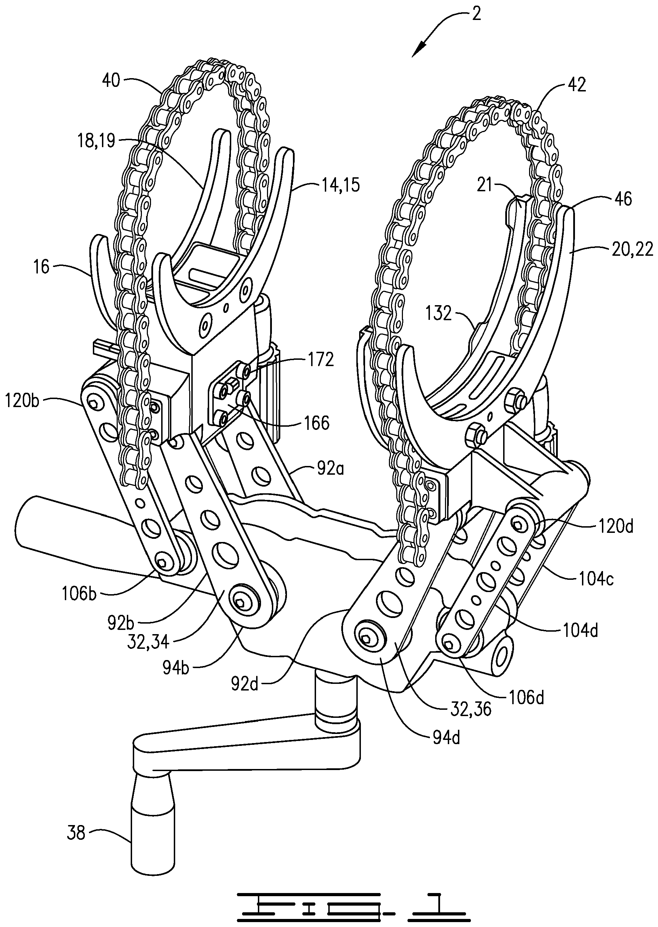

Rotation of the coupling clamp screw 316 in a first direction, for example, rotation of left coupling clamp jaw handle 332 to the right, or clockwise in the view of FIG. 15, causes left and right coupling jaws 292 and 294 to move together to clamp and hold a coupling like coupling 6 in the embodiment of FIG. 1. Rotation in a second, or opposite direction causes the coupling jaws 292 and 294 to move transversely away from each other. Thus, coupling clamp screw 316 has a non-threaded center portion 340, and has a right hand thread on the left side 342 thereof, and a left hand thread on the right side 344 thereof. The thread direction can be reversed, since it is only necessary that the left and right thread directions be different, so that rotation of the single screw 316 will move both of coupling jaws 292 and 294. In the embodiment described, the threads may be buttress threads, which as known in the art are tapered on one side and square on the other. The square thread will provide for a greater clamping strength when the coupling jaws 392 and 294 are clamped to a coupling, while the tapered side allows for an easier release. Thus, the square face of the thread on the coupling clamp screw 316 faces inward relative to the jaws 292 and 294. As is understood from the figures, rotation in the first direction pushes left and right drive nuts 318 and 320 inward, which will press on coupling clamp jaws 292 and 294 and push them inwardly towards one another. Rotation in the opposite direction causes drive nuts 318 and 320 to push on left and right snap rings 324 and 326 and move coupling clamp jaws 292 and 294 outwardly relative to each other. Left coupling clamp jaw handle 332 and right coupling clamp jaw handle 334, which may be referred to as coupling clamp jaw handles 332 and 334, are used to rotate the coupling clamp screw.

If coupling clamp jaws 292 and 294 do not clamp with relatively equal force, coupling clamp jaws 292 and 294 can be adjusted by removing one of snap rings 324 and 326, and adjusting the relative position of left and right drive nuts 318 and 320. For example, upon removal of snap ring 324, left hand coupling jaw 292 may be freely moved toward non-threaded center 340 until it clears left hand drive nut 316. Left hand drive nut, because it is a hex nut, can be rotated in 1/6 rotation increments in either direction until the optimum clamping location is reached. Because the drive nuts are hex shaped, fine tuning, or fine adjustment of the positions of coupling jaws 292 and 294 is possible.

Second slide 314 to which pipe jaw assembly 186 is connected comprise slide, or slide bar 346 with a screw retaining block 348 connected thereto with a pair of dowel pins 350 or other known means. Screw retaining block 348 are fixed to slide 346 with dowel pins 350 at or near the center of the jaw slide bar 346. Screw retaining block 348 has a curved, or arcuate recess 352 in which non-threaded center 340 rests and rotates. Collars 354 are connected to non-threaded center 340 on both sides of retaining block 348 to aid in holding the pipe clamp screw 316 in place. The left and right pipe clamp jaws attaches to the slide bar 346.

Second slide 314 is a generally T-shaped slide with leg 356 and T-portion 358 with arms 360. Arms 360 are received in channels 310 and 312. An upper surface 362 of T-portion 358 has a recess 364 so as to reduce friction when pipe clamp jaws 292 and 294 are sliding thereover. The width and thickness of legs 356 are such that during clamping tilting of the pipe jaws 292 and 294 is prevented, or at least minimized. Second slide 314 has a connecting block 364 extending downwardly from T portion 358. A pivot or jaw block 366 is connected thereto.

Second slide 314 attaches to the pivot block 366 with fasteners extending therethrough into connecting block 364. A pin 368 extends upwardly through pivot block 366 into second slide 314. Four bar linkage 34 are connected in the same manner as described with reference to socket fusion jig 12. In the embodiment of FIG. 15, the fourth link of four bar linkage 36 are the portions of pivot block 366 between the upper ends 96 and 120 of input link 94 and follower link 104.

The operation of fusion jig 180 is apparent from the drawings, and operates similarly to fusion jig 2. A pipe 4 is fixed against movement. Pipe jaws 292 are opened wide enough to allow insertion of pipe 4. Rotation of either of coupling clamp jaw handles 332 or 334 will move the pipe jaws 292 and 294. Prior to placing the pipe between jaws 292 and 294, the proper insertion depth is marked in a manner known in the art, using stab depth indicators and known stab depth values. The proper stab depth is marked, and then either of coupling jaw handles 332 or 334 is rotated to engage pipe 4. Likewise, either of the pipe clamp jaw handles 232 or 234 can be rotated to clamp coupling 6 between coupling jaws 192 and 194.

A heater is placed between pipe 4 and coupling 6, and handle 38 is rotated. Pipe 4 and coupling 6 will move laterally towards one another, with the horizontal axis of each being substantially collinear as they move. Coupling 6 is positioned over the heater and pipe 4 is inserted to the proper stab depth. Once heated, handle 38 can be rotated to move the pipe jaw assembly 184 and coupling jaw assembly 186 apart, which moves the pipe and coupling apart. The heater is removed, and the pipe 4 is inserted into coupling 6 to the proper depth by rotating handle 38 to bring pipe support 184 and coupling support 186 together until the pipe is inserted to the proper depth in the coupling. Because of the V shape of the pipe jaws and coupling jaws, the pipe and coupling engage at four portions, or points around the circumference thereof. The rotation of handle 38 about a vertical axis thus causes linear, lateral relative movement between pipe support 184 and coupling support 186. The horizontal axis of the coupling and pipe being joined can stay in line as the pipe and couplings are moved together, thus ensuring an efficient and consistent joining operation.

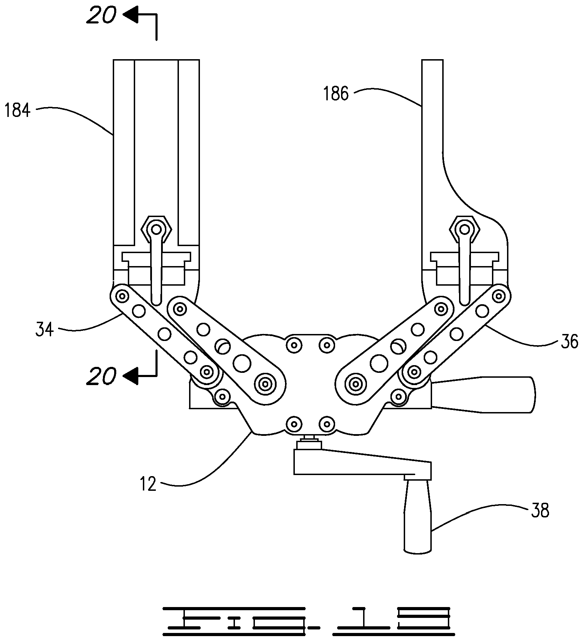

Turning to FIG. 19, a side perspective view of the fusion jig 180 shown in FIG. 15 is provided. The fusion jig 180 comprises pipe jaw assembly 184, four bar linkages 34 and 36, coupling jaw assembly 186, gear box 12 and handle 38.

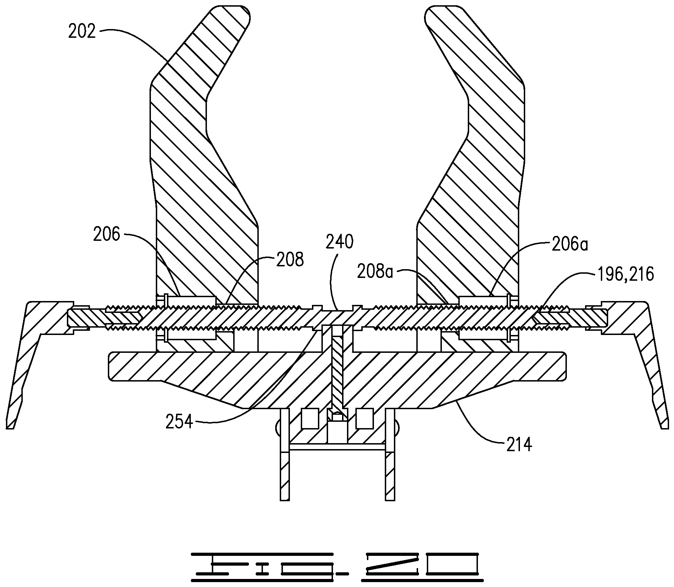

Turning to FIG. 20, a section line along 20-20 shown in FIG. 19 is provided. FIG. 20 better illustrates the manner in which tightening mechanism 196 extends through the pipe jaw assembly 184. As shown in FIG. 20, the tightening mechanism 196 extends through the hexagonal opening 206 in the left hand pipe clamp jaw 192. The tightening mechanism further extends through the passage 208 in the left hand pipe clamp jaw 192. The non-threaded center 240 of the tightening mechanism 196 contacts the retaining block 248. The tightening mechanism further extends through the passage 208a in the right hand pipe clamp jaw 194 and the hexagonal opening 206a in the right hand pipe clamp jaw 194.

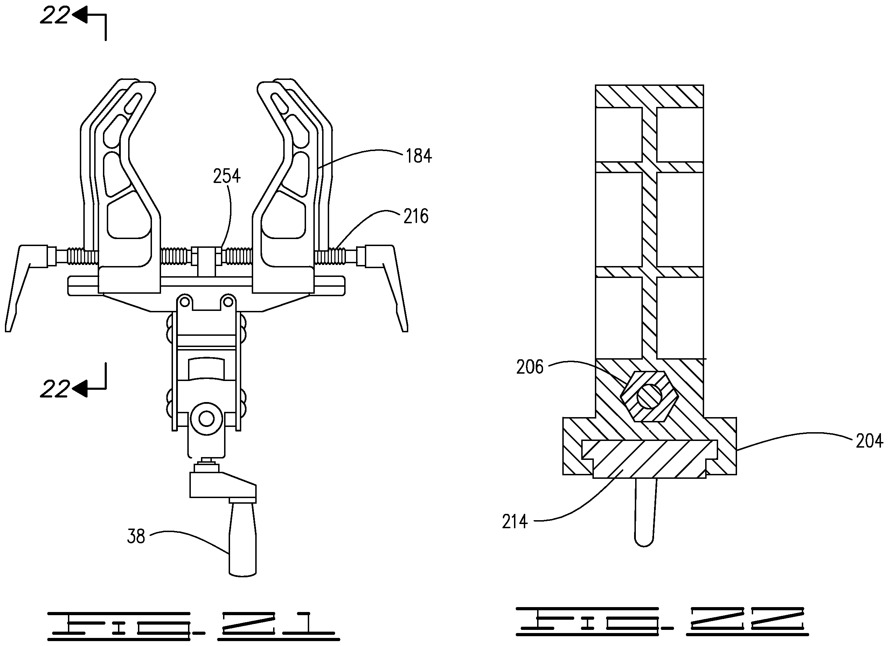

Turning to FIG. 21, a view of the pipe clamp of the embodiment of FIG. 15 is provided. As shown, the pipe clamp comprises a handle 38, one or more collars 254, a pipe support 184 and a pipe clamp screw 216.

Turning to FIG. 22, a view from the line 22-22 in FIG. 21 is provided. FIG. 22 illustrates an arrangement of a hexagonal opening 206 in the pipe support 184. Additionally, FIG. 22 illustrates that the base 204 of the pipe support 184 is slidably attached to the slide 214.

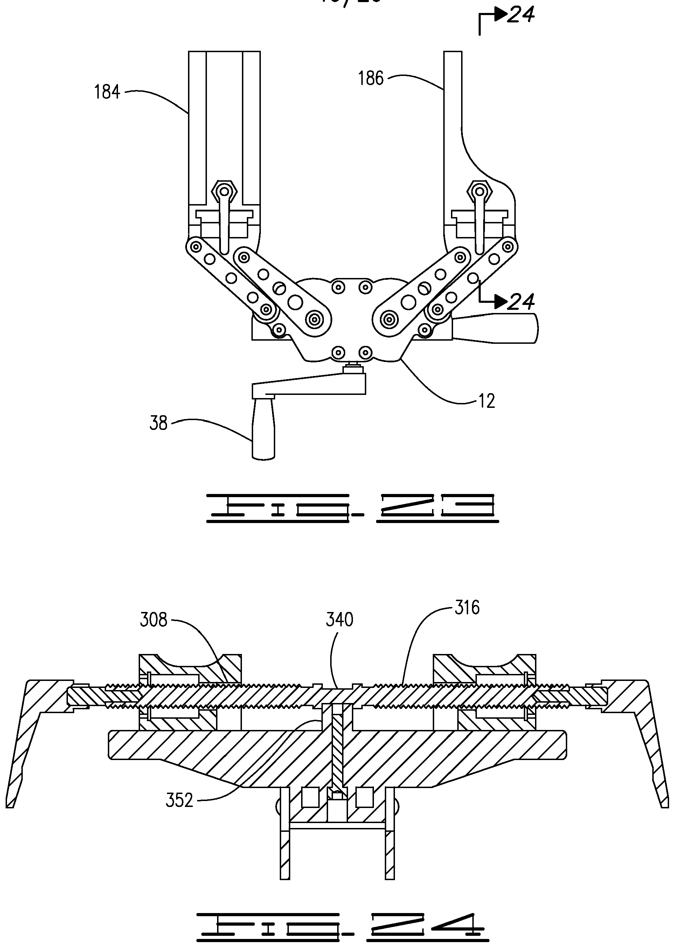

Turning to FIG. 23, a side view of the socket jig 180 shown in FIG. 15 is provided. As discussed, the socket jig 180 comprises pipe support 184, coupling jaw assembly 186, handle 38 and gear box 12.

Turning to FIG. 24, a section view along line 24-24 as shown in FIG. 23 is provided. FIG. 24 illustrates one manner in which tightening mechanism 296 extends through the coupling jaw assembly 186. As shown in FIG. 24, the tightening mechanism 296 extends through the hexagonal opening 306 in the left hand coupling clamp jaw 292. The tightening mechanism further extends through the passage 308 in the left hand coupling clamp jaw 292. The non-threaded center 340 of the tightening mechanism 296 contacts the retaining block 348. The tightening mechanism further extends through the passage 308a in the right hand coupling clamp jaw 294 and the hexagonal opening 306a in the right hand coupling clamp jaw 194.

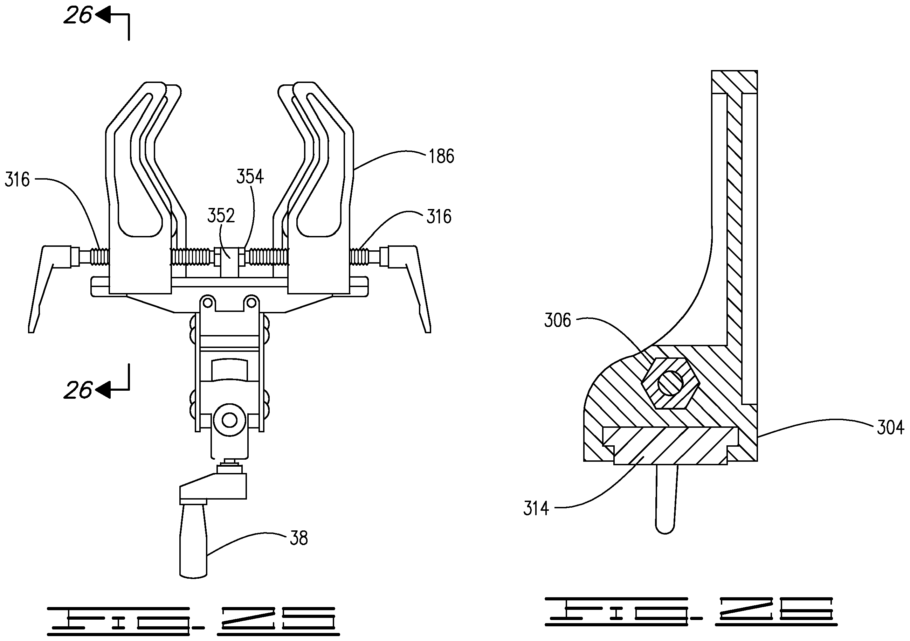

Turning to FIG. 25, a view of the coupling clamp in FIG. 15 is provided. As discussed, the clamp can comprise a coupling clamp screw 316, collar 354, coupling jaw assembly 186, pipe clamp screw 316, handle 38 and retaining block 348.

Turning to FIG. 26, a view from the line 26-26 is provided. As discussed, the clamp comprises hexagonal opening 306 in base 304 and the base 304 is slidably mounted onto second slide 314.

Thus, the apparatus of the present invention achieve the ends and advantages mentioned and those inherent therein. While certain preferred embodiments of the invention have been illustrated and described for purposes of the present disclosure, numerous changes in the arrangement and construction of parts and steps may be made by those skilled in the art. Those changes are encompassed within the scope of the present invention as defined by the appended claims.

## Claims

1. A socket fusion jig (180) comprising:
a pipe support (184) comprising a left pipe clamp jaw (192) and a right pipe clamp jaw (194);
a coupling support (186); and
a first input link (94) rotatable about an axis at a first end thereof, wherein rotation of the first input link (94) moves the coupling support (186) laterally relative to the pipe support (184),
**characterized by**:
a pipe clamp screw (216), wherein rotation of the pipe clamp screw (216) causes the left pipe clamp jaw (192) and the right pipe clamp jaw (194) to move in opposite directions.

2. The socket fusion jig (180) of claim 1, further comprising a second input link (92) rotatable about an axis at a first end thereof, wherein rotation of the second input link (92) moves the pipe support (184) laterally relative to the coupling support (186).

3. The socket fusion jig (180) of claim 1, wherein the left pipe clamp jaw (192) defines an opening therethrough and the right pipe clamp jaw (194) defines an opening therethrough and wherein the pipe clamp screw (216) extends through the opening in the left pipe clamp jaw (192) and the opening in the right pipe clamp jaw (194).

4. The socket fusion jig (180) of claim 3, further comprising a left pipe drive nut (218) and a right pipe drive nut (220), wherein the left pipe drive nut (218) and the right pipe drive nut (220) are threadedly attached to the pipe clamp screw (216) and cause the left pipe clamp jaw (192) and the right pipe clamp jaw (194) to move in opposite directions in response to rotation of the pipe clamp screw (216).

5. The socket fusion jig (180) of claim 4, further comprising one or more rigid members (224, 226) that prevent the left pipe drive nut (218) from moving relative to the left pipe clamp jaw (192) and prevent the right pipe drive nut (220) from moving relative to the right pipe clamp jaw (194).

6. The socket fusion jig (180) of claim 5, wherein the rigid members (224, 226) are snap rings (224, 226).

7. The socket fusion jig (180) of any one of the preceding claims, wherein said coupling support (186) comprises a left coupling clamp jaw (292) and a right coupling clamp jaw (294).

8. The socket fusion jig (180) of claim 7, wherein the left pipe clamp jaw (192) and the right pipe clamp jaw (194) each have a serrated interior surface (198) and the left coupling clamp jaw (292) and right coupling clamp jaw (294) each have a serrated interior surface (298).

9. The socket fusion jig (180) of claim 7 or 8, wherein the left pipe clamp jaw (192) and right pipe clamp jaw (194) are configured to engage a pipe positioned therebetween at a plurality of locations, optionally four locations, on the circumference of the pipe (4), and the left coupling clamp jaw (292) and right coupling clamp jaw (294) are configured to engage a coupling (6) positioned therebetween at a plurality of locations, optionally four locations, on the circumference of the coupling (6).

10. The socket fusion jig (180) of claim 7 or 8, further comprising a coupling clamp screw (316), wherein the left coupling clamp jaw (292) and the right coupling clamp jaw (294) are configured to move in opposite directions in response to rotation of the coupling clamp screw (316).

11. The socket fusion jig (180) of claim 10, further comprising a left coupling drive nut (318) and a right coupling drive nut (320), wherein the left coupling drive nut (318) and the right coupling drive nut (320) are threadedly attached to the coupling clamp screw (316) and cause the left coupling clamp jaw (292) and the right coupling clamp jaw (294) to move in opposite directions in response to rotation of the coupling clamp screw (316).

12. The socket fusion jig (180) of any one of the preceding claims 7-11, further comprising:
a first slide (214). wherein the left pipe clamp jaw (192) and the right pipe clamp jaw (194) move along the first slide (214); and
a second slide (314). wherein the left coupling clamp jaw (292) and the right coupling clamp jaw (294) move along the second slide (314).

13. The socket fusion jig (180) of claim 12 when dependent on claim 10 or 11, wherein rotation of the pipe clamp screw (216) causes the left pipe clamp jaw (192) and the right pipe clamp jaw (194) to move along the first slide (214) in opposite directions and wherein rotation of the coupling clamp screw (316) causes the left coupling clamp jaw (292) and the right coupling clamp jaw (294) to move along the second slide (314) in opposite directions.

14. The socket fusion jig (180) of any one of the preceding claims, further comprising a handle (38) operably associated with the pipe support (184) and the coupling support (194), wherein rotation of the handle (38) moves the pipe support (184) and the coupling support (186) laterally relative to one another.

## Patentansprüche

1. Fassungsverschmelzungsvorrichtung (180), umfassend:
eine Rohrhalterung (184), umfassend eine linke Rohrschellenbacke (192) und eine rechte Rohrschellenbacke (194);
eine Kupplungshalterung (186); und
eine erste Eingabeverbindung (94), die um eine Achse an einem ersten Ende davon drehbar ist, wobei die Drehung der ersten Eingabeverbindung (94) die Kupplungshalterung (186) lateral relativ zu der Rohrhalterung (184) bewegt,
**gekennzeichnet durch** Folgendes:
eine Rohrklemmschraube (216), wobei die Drehung der Rohrklemmschraube (216) verursacht, dass sich die linke Rohrschellenbacke (192) und die rechte Rohrschellenbacke (194) in entgegengesetzte Richtungen bewegen.

2. Fassungsverschmelzungsvorrichtung (180) nach Anspruch 1, ferner umfassend eine zweite Eingabeverbindung (92), die um eine Achse an einem ersten Ende davon drehbar ist, wobei die Drehung der zweiten Eingabeverbindung (92) die Rohrhalterung (184) lateral relativ zu der Kupplungshalterung (186) bewegt.

3. Fassungsverschmelzungsvorrichtung (180) nach Anspruch 1, wobei die linke Rohrschellenbacke (192) eine Öffnung dadurch definiert und die rechte Rohrschellenbacke (194) ein Öffnung dadurch definiert und wobei sich die Rohrklemmschraube (216) durch die Öffnung der linken Rohrschellenbacke (192) und die Öffnung der rechten Rohrschellenbacke (194) erstreckt.

4. Fassungsverschmelzungsvorrichtung (180) nach Anspruch 3, ferner umfassend eine linke Rohrschlagmutter (218) und eine rechte Rohrschlagmutter (220), wobei die linkte Rohrschlagmutter (218) und die rechte Rohrschlagmutter (220) mit Gewinde an der Rohrklemmschraube (216) befestigt sind und verursachen, dass sich die linke Rohrschellenbacke (192) und die rechte Rohrschellenbacke (194) in entgegengesetzte Richtungen bewegen als Reaktion auf die Drehung der Rohrklemmschraube (216).

5. Fassungsverschmelzungsvorrichtung (180) nach Anspruch 4, ferner umfassend ein oder mehrere starre Elemente (224, 226), die verhindern, dass sich die linke Rohrschlagmutter (218) relativ zu der linken Rohrschellenbacke (192) bewegt und verhindern, dass sich die rechte Rohrschlagmutter (220) relativ zu der rechten Rohrschellenbacke (194) bewegt.

6. Fassungsverschmelzungsvorrichtung (180) nach Anspruch 5, wobei die starren Elemente (224, 226) Sprengringe (224, 226) sind.

7. Fassungsverschmelzungsvorrichtung (180) nach einem der vorhergehenden Ansprüche, wobei die Kupplungshalterung (186) eine Kupplungsschellenbacke (292) und eine rechte Kupplungsschellenbacke (294) umfasst.

8. Fassungsverschmelzungsvorrichtung (180) nach Anspruch 7, wobei die linke Rohrschellenbacke (192) und die rechte Rohrschellenbacke (194) jeweils eine gezackte Innenfläche (198) haben und die linke Kupplungsschellenbacke (292) und die rechte Kupplungsschellenbacke (294) jeweils eine gezackte Innenfläche (298) haben.

9. Fassungsverschmelzungsvorrichtung (180) nach Anspruch 7 oder 8, wobei die linke Rohrschellenbacke (192) und die rechte Rohrschellenbacke (194) konfiguriert sind, um mit einem Rohr, das dazwischen positioniert ist, an einer Vielzahl von Stellen, optional an vier Stellen, an dem Umfang des Rohrs (4) in Eingriff zu sein, und die linke Kupplungsschellenbacke (292) und die rechte Kupplungsschellenbacke (294) konfiguriert sind, um mit einer Kupplung (6), die dazwischen positioniert ist, an einer Vielzahl von Stellen, optional an vier Stellen, an dem Umfang der Kupplung (6) in Eingriff zu sein.

10. Fassungsverschmelzungsvorrichtung (180) nach Anspruch 7 oder 8, ferner umfassend eine Kupplungsklemmschraube (316), wobei die linke Kupplungsschellenbacke (292) und die rechte Kupplungsschellenbacke (294) konfiguriert sind, um sich in entgegengesetzte Richtungen als Reaktion auf die Drehung der Kupplungsklemmschraube (316) zu bewegen.

11. Fassungsverschmelzungsvorrichtung (180) nach Anspruch 10, ferner umfassend eine linke Kupplungsschlagmutter (318) und eine rechte Kupplungsschlagmutter (320), wobei die linkte Kupplungsschlagmutter (318) und die rechte Kupplungsschlagmutter (320) mit Gewinde an der Kupplungsklemmschraube (316) befestigt sind und verursachen, dass sich die linke Kupplungsschellenbacke (292) und die rechte Kupplungsschellenbacke (294) in entgegengesetzte Richtungen bewegen als Reaktion auf die Drehung der Kupplungsklemmschraube (316).

12. Fassungsverschmelzungsvorrichtung (180) nach einem der vorhergehenden Ansprüche 7-11, ferner umfassend:
eine erste Gleitschiene (214), wobei sich die linke Rohrschellenbacke (192) und die rechte Rohrschellenbacke (194) entlang der ersten Gleitschiene (214) bewegen; und
eine zweite Gleitschiene (314), wobei sich die linke Kupplungsschellenbacke (292) und die rechte Kupplungsschellenbacke (294) entlang der zweiten Gleitschiene (314) bewegen.

13. Fassungsverschmelzungsvorrichtung (180) nach Anspruch 12, wenn abhängig von Anspruch 10 oder 11, wobei Drehung der Rohrklemmschraube (216) verursacht, dass sich die linke Rohrschellenbacke (192) und die rechte Rohrschellenbacke (194) entlang der ersten Gleitschiene (214) in entgegengesetzte Richtungen bewegen, und wobei Drehung der Kupplungsklemmschraube (316) verursacht, dass sich die linke Kupplungsschellenbacke (292) und die rechte Kupplungsschellenbacke (294) entlang der zweiten Gleitschiene (314) in entgegengesetzte Richtungen bewegen.

14. Fassungsverschmelzungsvorrichtung (180) nach einem der vorhergehenden Ansprüche, ferner umfassend einen Griff (38), der mit der Rohrhalterung (184) und der Kupplungshalterung (194) betriebsfähig verbunden ist, wobei Drehung des Griffs (38) die Rohrhalterung (184) und die Kupplungshalterung (186) lateral relativ zueinander bewegt.

## Revendications

1. Appareil d'assemblage par fusion à emboîtement (180), comprenant :
un support de tuyau (184) comprenant une mâchoire de serrage de tuyau gauche (192) et une mâchoire de serrage de tuyau droite (194) ;
un support de couplage (186) ; et
une première liaison d'entrée (94) rotative autour d'un axe à une première extrémité de celle-ci, dans lequel la rotation de la première liaison d'entrée (94) déplace le support de couplage (186) latéralement relativement au support de tuyau (184),
**caractérisé par** :
une vis de serrage de tuyau (216), dans lequel la rotation de la vis de serrage de tuyau (216) fait en sorte que la mâchoire de serrage de tuyau gauche (192) et la mâchoire de serrage de tuyau droite (194) se déplace dans des directions opposées.

2. Appareil d'assemblage par fusion à emboîtement (180) selon la revendication 1, comprenant en outre une seconde liaison d'entrée (92) rotative autour d'un axe à une première extrémité de celle-ci, dans lequel la rotation de la seconde liaison d'entrée (92) déplace le support de tuyau (184) latéralement relativement au support de couplage (186).

3. Appareil d'assemblage par fusion à emboîtement (180) selon la revendication 1, dans lequel la mâchoire de serrage de tuyau gauche (192) définit une ouverture à travers celle-ci et la mâchoire de serrage de tuyau droite (194) définit une ouverture à travers celle-ci et dans lequel la vis de serrage de tuyau (216) s'étend à travers l'ouverture dans la mâchoire de serrage de tuyau gauche (192) et l'ouverture dans la mâchoire de serrage de tuyau droite (194).

4. Appareil d'assemblage par fusion à emboîtement (180) selon la revendication 3, comprenant en outre un écrou d'entraînement de tuyau gauche (218) et un écrou d'entraînement de tuyau droit (220), dans lequel l' écrou d'entraînement de tuyau gauche (218) et l'écrou d'entraînement de tuyau droit (220) sont attachés de façon filetée à la vis de serrage de tuyau (216) et font en sorte que la mâchoire de serrage de tuyau gauche (192) et la mâchoire de serrage de tuyau droite (194) se déplace dans des directions opposées en réponse à la rotation de la vis de serrage de tuyau (216).

5. Appareil d'assemblage par fusion à emboîtement (180) selon la revendication 4, comprenant en outre un ou plusieurs éléments rigides (224, 226) qui empêchent l'écrou d'entraînement de tuyau gauche (218) de se déplacer relativement à la mâchoire de serrage de tuyau gauche (192) et empêchent l'écrou d'entraînement de tuyau droit (220) de se déplacer relativement à la mâchoire de serrage de tuyau droite (194).

6. Appareil d'assemblage par fusion à emboîtement (180) selon la revendication 5, dans lequel les éléments rigides (224, 226) sont des bagues à encliquetage (224, 226).

7. Appareil d'assemblage par fusion à emboîtement (180) selon l'une quelconque des revendications précédentes, dans lequel ledit support de couplage (186) comprend une mâchoire de serrage de couplage gauche (292) et une mâchoire de serrage de couplage droite (294).

8. Appareil d'assemblage par fusion à emboîtement (180) selon la revendication 7, dans lequel la mâchoire de serrage de tuyau gauche (192) et la mâchoire de serrage de tuyau droite (194) ont chacune une surface intérieure dentelée (198) et les mâchoire de serrage de couplage gauche (292) et mâchoire de serrage de couplage droite (294) ont chacune une surface intérieure dentelée (298).

9. Appareil d'assemblage par fusion à emboîtement (180) selon la revendication 7 ou 8, dans lequel les mâchoire de serrage de tuyau gauche (192) et mâchoire de serrage de tuyau droite (194) sont configurées pour entrer en prise avec un tuyau positionné entre celles-ci à une pluralité d'emplacements, optionnellement quatre emplacements, sur la circonférence du tuyau (4), et les mâchoire de serrage de couplage gauche (292) et mâchoire de serrage de couplage droite (294) sont configurées pour entrer en prise avec un couplage (6) positionné entre celles-ci à une pluralité d'emplacements, optionnellement quatre emplacements, sur la circonférence du couplage (6).

10. Appareil d'assemblage par fusion à emboîtement (180) selon la revendication 7 ou 8, comprenant en outre une vis de serrage de couplage (316), dans lequel la mâchoire de serrage de couplage gauche (292) et la mâchoire de serrage de couplage droite (294) sont configurées pour se déplacer dans des directions opposées en réponse à la rotation de la vis de serrage de couplage (316).

11. Appareil d'assemblage par fusion à emboîtement (180) selon la revendication 10, comprenant en outre un écrou d'entraînement de couplage gauche (318) et un écrou d'entraînement de couplage droit (320), dans lequel l'écrou d'entraînement de couplage gauche (318) et l'écrou d'entraînement de couplage droit (320) sont attachés de façon filetée à la vis de serrage de couplage (316) et font en sorte que la mâchoire de serrage de couplage gauche (292) et la mâchoire de serrage de couplage droite (294) se déplacent dans des directions opposées en réponse à la rotation de la vis de serrage de couplage (316).

12. Appareil d'assemblage par fusion à emboîtement (180) selon l'une quelconque des revendications précédentes 7 à 11, comprenant en outre :
une première coulisse (214), dans lequel la mâchoire de serrage de tuyau gauche (192) et la mâchoire de serrage de tuyau droite (194) se déplacent le long de la première coulisse (214) ; et
un seconde coulisse (314), dans lequel la mâchoire de serrage de couplage gauche (292) et la mâchoire de serrage de couplage droite (294) se déplacent le long de la seconde coulisse (314).

13. Appareil d'assemblage par fusion à emboîtement (180) selon la revendication 12 lorsqu'elle dépend de la revendication 10 ou 11, dans lequel la rotation de la vis de serrage de tuyau (216) fait en sorte que la mâchoire de serrage de tuyau gauche (192) et la mâchoire de serrage de tuyau droite (194) se déplacent le long de la première coulisse (214) dans des directions opposées et dans lequel la rotation de la vis de serrage de couplage (316) fait en sorte que la mâchoire de serrage de couplage gauche (292) et la mâchoire de serrage de couplage droite (294) se déplacent le long de la seconde coulisse (314) dans des directions opposées.

14. Appareil d'assemblage par fusion à emboîtement (180) selon l'une quelconque des revendications précédentes, comprenant en outre une poignée (38) fonctionnellement associée au support de tuyau (184) et au support de couplage (194), dans lequel la rotation de la poignée (38) déplace le support de tuyau (184) et le support de couplage (186) latéralement l'un relativement à l'autre.
